# Europäisches Patentamt
# European Patent Office
# Office européen des brevets

(19)

(11) Numéro de publication: **0 069 682**
**B1**

(12)

# FASCICULE DE BREVET EUROPEEN

(45) Date de publication du fascicule du brevet:
03.07.85

(51) Int. Cl.⁴: **B 29 C 63/00,** B 29 C 49/22

(21) Numéro de dépôt: 82420068.7

(22) Date de dépôt: 28.05.82

(54) Procédé de préparation de corps creux biorientés en matière plastique, comportant un revêtement imperméable aux gaz et résistant à l'eau et les corps creux obtenus conformément à ce procédé.

(30) Priorité: 03.06.81 FR 8111119

(43) Date de publication de la demande:
12.01.83 Bulletin 83/2

(45) Mention de la délivrance du brevet:
03.07.85 Bulletin 85/27

(84) Etats contractants désignés:
AT BE CH DE FR GB IT LI LU NL SE

(56) Documents cités:
FR - A - 2 341 433
US - A - 3 600 487

CHEMICAL ABSTRACTS, vol. 89, 1978, page 36, no. 44727J, Columbus Ohio (USA); F. RANALLI: "Blown thermoplastic containers with high impermeability"
CHEMICAL ABSTRACTS, vol. 91, 1979, page 43, no. 194255J, Columbus Ohio (USA); F. RANALLI: "Blow-molded thermoplastic containers of low permeability"

(73) Titulaire: RHONE-POULENC SPECIALITES CHIMIQUES, "Les Miroirs" 18, Avenue d'Alsace, F-92400 Courbevoie (FR)

(72) Inventeur: Bonnebat, Claude, 5, rue Alfred de Musset, F-77340 Pontault - Combault (FR)
Inventeur: Roullet, Gilbert, 337, Cité St-Roch, F-58500 Clamecy (FR)

(74) Mandataire: Trolliet, Maurice et al, RHONE-POULENC RECHERCHES Service Brevets Chimie et Polymères Centre de Recherches de Saint-Fons B.P. 62, F-69192 St-Fons Cédex (FR)

## Description

La présente invention est relative à un procédé pour l'obtention de corps creux composites biorientés en matière thermoplastique réalisés par soufflage à partir d'une ébauche tubulaire, d'une paraison ou d'une préforme.

L'invention est plus particulièrement relative à un procédé pour l'obtention de corps creux en polyesters biorientés et imperméables aux gaz et aux arômes.

L'invention est également relative aux corps creux à propriétés améliorées obtenus par le procédé.

L'invention est encore relative aux ébauches tubulaires, paraisons ou préformes qui conduisent par soufflage aux corps creux biorientés.

Dans le présent mémoire, on entend par ébauche tubulaire une section de tube, ouverte à ses deux extrémités, généralement de grande longueur pouvant être comprise par exemple entre 50 cm et 2 m ou davantage. Par paraison, on entend désigner une section de tube ouverte à ses deux extrémités dont la longueur est comprise en général entre 5 cm et 20 cm. Par préforme, on entend désigner une section de tube, dont la longueur peut être identique ou différente de celle d'une paraison, qui possède une extrémité formée et une extrémité ouverte ou col qui est déjà moulée dans sa forme définitive.

Dans le domaine des corps creux les matières thermoplastiques ont acquis un rapide développement au cours des récentes années. On connait en particulier la remarquable aptitude du polytéréphtalate d'éthylène à donner par biorientation-soufflage de préformes des bouteilles qui possèdent d'excellentes propriétés mécaniques (notamment de résistance au choc et de tenue à la pression interne) leur permettant d'être utilisées avantageusement pour l'emballage de liquides pressurisés et de boissons gazeuses. Cependant la bonne conservation du produit emballé est parfois limitée dans le temps, lorsqu'il s'agit de liquides aromatisés et/ou sensibles à l'oxygène et/ou carbonatés par suite de l'insuffisance de l'imperméabilité aux gaz et aux aromes des corps creux en polytéréphtalate. Ce phénomène est d'autant plus important que la paroi du corps creux est mince et que le rapport de la surface du récipient au volume du contenu est grand. Pour diminuer la perméabilité des corps creux il a déjà été proposé d'enduire leur surface à l'aide d'un matériau barrière qui possède une plus faible perméabilité aux gaz que celle du substrat.

Les brevets français N° 2 416 784 et N° 2 416 785 montrent que l'alcool polyvinylique peut être un excellent matériau barrière pour les bouteilles biorientées en polytéréphtalate d'éthylène. Selon les processus décrits dans ces brevets, le revêtement est appliqué sur au moins l'une des parois de la préforme, avant que cette dernière ne soit biétirée-soufflée, par enduction à l'aide d'une solution aqueuse d'alcool polyvinylique ou à l'aide d'une composition aqueuse renfermant de l'alcool polyvinylique en solution et un latex de polymère peu sensible à l'eau. Le revêtement est séché et la préforme est ensuite biétirée-soufflée.

Cette technique particulière n'est cependant pas encore totalement satisfaisante car elle conduit au départ d'alcool polyvinylique seul à des revêtements dont la résistance à l'eau est insuffisante et elle ne permet pas de réaliser des revêtements épais de manière industriellement intéressante. L'application du revêtement par enduction aqueuse implique en effet l'emploi de liquides d'enduction ayant une faible concentration en polymère. Il y a deux raisons principales à cela: d'une part l'alcool polyvinylique n'est pas soluble dans l'eau à de fortes concentrations, d'autre part l'enduction à l'aide d'un milieu de forte viscosité est difficile à réaliser. Par enduction, on dépose donc assez peu de matière et on arrive en définitive à un revêtement de faible épaisseur, se situant généralement entre 20 et 50 $\mu$ pour la préforme et entre 2 et 5 $\mu$ pour le corps creux final. Or, dans certains cas, notamment lorsque les bouteilles doivent renfermer des liquides fortement sensibles à l'oxygène et/ou fortement carbonatés, il est souhaitable d'avoir un revêtement plus épais pour accroître l'efficacité d'imperméabilisation du matériau barrière; des épaisseurs de revêtement qui conviennent bien se situent alors généralement entre 0,1 et 2 mm pour la préforme et entre 10 et 200 $\mu$ pour le corps creux final. De pareilles épaisseurs peuvent bien entendu être obtenues par enduction aqueuse, mais pour atteindre ce but il faut prévoir en pratique l'application de plusieurs couches successives avec l'obligation de sécher convenablement chaque couche intermédiaire car, dans le cas d'un empilement de plusieurs revêtements, la couche superficielle va s'opposer au séchage des couches profondes et l'absence de séchage peut conduire à une délamination. En définitive, cette multiplicité des opérations de revêtement et de séchage ôte tout intérêt industriel au revêtement par enduction pour déposer des couches épaisses.

La présente invention a pour but justement de fournir un procédé aboutissant au dépôt direct d'un revêtement épais dans lequel on ne fait pas appel à une enduction en plusieurs couches et qui permet d'obtenir des corps creux conservant les qualités de transparence et de brillance souhaitées.

Un autre but visé par la présente invention est de fournir un procédé aboutissant au dépôt d'un revêtement non seulement épais, mais encore très résistant à l'eau.

Il a maintenant été trouvé qu'on pouvait arriver à tout ou partie de ces buts grâce au procédé conforme à la présente invention.

Plus précisement, la présente invention concerne un procédé d'obtention de corps creux biorienté en matière thermoplastique comprenant d'abord la fabrication d'une ébauche tubulaire, d'une paraison ou d'une préforme revêtue d'un matériau barrière à base d'alcool polyvinylique, puis le biétirage-soufflage de ladite ébauche tubulaire, paraison ou préforme dans les conditions usuelles de température de la biorientation, ledit procédé étant caractérisé en ce que la fabrication de l'ébauche tubulaire, paraison ou préforme revêtue fait appel à l'enchaînement des étapes suivantes:

(a) introduction dans une extrudeuse de flocons constitués d'alcool polyvinylique ayant un degré de pureté élevé et d'eau, la teneur pondérale en eau desdits flocons étant comprise entre 20% et 50%,

(b) plastification par cisaillement et fusion des flocons à une température au moins égale à une température supérieure de 100°C à la température de fusion d'équilibre du mélange d'alcool polyvinylique et d'eau constituant les flocons pour éviter toute hétérogénéité de phase dans le masse fondue,

(c) extrusion de la matière fondue à travers une filière de revêtement appropriée pour enduire un tube, une paraison ou une préforme en matière thermoplastique en veillant, en effectuant un refroidissement, à ce que la température de l'extrudat fondu dans la filière se situe à une valeur qui est au moins égale à la température de fusion d'équilibre du mélange d'alcool polyvinylique et d'eau considéré mais est inférieure à celle à laquelle la tension de vapeur de l'eau est suffisante pour provoquer à l'air libre l'expansion du futur revêtement par formation de bulles, ledit refroidissement étant opéré de façon homogène, avant le passage de l'extrudat fondu dans la filière, à l'aide d'un dispositif consistant en un refroidisseur-homogénéiseur intercalé entre l'extrémité du fourreau de l'extrudeuse et la filière de revêtement,

(d) réception du tube, de la paraison ou de la préforme ainsi revêtu, suivie dans le cas d'un tube de sa transformation en ébauches tubulaires, en paraisons ou en sections de tube précurseurs de préformes par tronçonnement à la longueur désirée.

Comme variante pouvant être apportée au procédé décrit ci-avant, on citera celle consistant à réaliser, après les étapes (a) et (b) précitées et à la place de l'étape (c) précitée, les opérations suivantes:

(e) extrusion-gonflage de la matière fondue à travers une filière annulaire dans les conditions de température définies ci-avant pour former une gaine,

(e') ou bien extrusion de la matière fondue sous forme d'un tube suivie d'une opération de calibrage, selon la technique de fabrication des tubes annelés, à l'aide d'un conformateur mobile à parois lisses en utilisant une légère pression interne d'air pour former la gaine souhaitée,

(f) et emploi de ladite gaine, éventuellement après découpage transversal, comme manchon applicable sur un tube, une paraison ou une préforme.

A noter que l'on peut procéder sans inconvénient à un stockage à l'air ambiant des tubes, paraisons et préformes revêtus comme indiqué ci-dessus, avant de les utiliser dans l'étape finale de biétirage-soufflage.

Un mode de réalisation préférentiel de l'invention consiste à enchaîner les étapes (a) et (b) avec l'étape (c) dans laquelle on procède au revêtement d'un tube par lamination. Dans ce cas, la lamination peut être mise en oeuvre directement en ligne avec l'extrusion du tube en matière thermoplastique.

Un autre mode de réalisation préférentiel de l'invention consiste à enchaîner les étapes (a), (b), et (e) ou (e') avec l'étape (f) dans laquelle on procède à l'application d'un manchon sur une préforme. Dans ce cas, le revêtement est opéré simplement par recouvrement de la partie droite étirable de la préforme qui s'étend de la base de son col jusqu'au début de son extrémité fermée.

Par l'expression extrudeuse, on entend désigner un appareil qui ne présente pas de zone morte lors de la progression de la matière. Des appareils de ce genre sont bien connus de l'homme de l'art et ils peuvent comporter une ou plusieurs vis.

Le procédé selon l'invention est applicable aux polymères amorphes tels que par exemple le polystyrène, standard ou choc, les homo- et copolymères du chlorure de vinyle, de l'acrylonitrile, les polyacrylates et polyméthacrylates, les polycarbonates. Il est applicable aussi aux polymères semi-cristallins tels que par exemple les polyoléfines comme le polyéthylène haute et basse densité, le polypropylène, le polybutène-1, les copolymères éthylène-propylène; les polyamides comme le polycaprolactame, les polyamides 6-6, 11 et 12; le polyoxyméthylène; les polyesters saturés comme les polytéréphtalates, polynaphtalénates, polyhydroxybenzoates d'éthylène glycol, de propylène glycol, de butylène glycol ou de dihydroxyméthyl-1,4 cyclohexane, leurs copolymères et leurs mélanges.

La matière thermoplastique qui est préférée pour constituer le substrat de base est un polytéréphtalate d'alkylèneglycol. Un matériau particulièrement intéressant consiste dans les homopolymères du téréphtalate d'éthylène glycol ou ses copolymères dans lesquels la composante acide est constituée d'au moins 95% d'acide téréphtalique et la composante diol est constituée d'au moins 95% d'éthylèneglycol; la viscosité intrinsèque de ces polyesters, mesurée dans l'orthochlorophénol est de préférence comprise entre 0,60 et 1,2 dl/g.

En ce qui concerne l'alcool polyvinylique, il est produit généralement par hydrolyse des polyesters de vinyle comme le polyacétate de vinyle.

L'alcool polyvinylique utilisé dans le procédé de l'invention est un composé ayant un degré de pureté élevé. Plus précisément, on fait appel à un alcool polyvinylique fortement hydrolysé possédant un indice d'ester bas, inférieur à 20.

Dans ce groupe d'alcools polyvinyliques à bas indice d'ester, on choisit de préférence les alcools ayant un taux d'éléments syndioctactiques (ou taux de syndiotacticité) supérieur à 50% en poids, une teneur en cendres inférieure à 1,5% en poids et une proportion d'éléments structuraux anormaux tels que des enchaînements glycol-1,2 inférieure à 1,5 enchaînements anormaux pour 100 unités monomères.

Les alcools polyvinyliques de ce type possédant un indice d'ester inférieur à 10 conviennent tout particulièrement bien.

Le poids moléculaire de l'alcool polyvinylique ne présente pas de caractère critique contrairement à ce qui se passe lorsque l'on utilise, conformément à l'art antérieur décrit ci-avant, une solution aqueuse d'alcool polyvinylique. Si l'on caractérise le degré de polymérisation par la viscosité d'une solution aqueuse à 4% en poids mesurée à 20°C à l'aide d'un viscosimètre du type OSTWALD, la gamme des produits commerciaux qui s'étend de 3 à 70 cPo est utilisable en totalité.

S'agissant des flocons d'alcool polyvinylique à introduire dans l'extrudeuse de l'étape (a), leur teneur pondérale en eau est comprise entre 20% et 50%.

De préférence, la teneur pondérale en eau des flocons est fixée à une valeur comprise entre 25% et 35%. Dans ces conditions, le revêtement déposé sur le substrat en matière thermoplastique, une fois qu'il est refroidi à la température ambiante, perd immédiatement son caractère collant, ce qui permet une manipulation aisée du substrat revêtu sans qu'il soit nécessaire d'effectuer un séchage partiel préalable.

La fabrication des flocons d'alcool polyvinylique se fait de manière connue en soi par imprégnation d'une poudre d'alcool polyvinylique avec la quantité d'eau choisie, en opérant dans un mélangeur approprié à une température de l'ordre de 60°C à 90°C. Dans les limites de quantités d'eau indiquées ci-dessus, on obtient des flocons qui ne collent pas et présentent de ce fait une bonne aptitude à l'écoulement. La granulométrie des flocons en rapport avec une alimentation régulière de l'extrudeuse ne présente aucun caractère critique et elle peut varier dans de larges limites.

Comme on l'a déjà mentionné ci-dessus, l'une des conditions essentielles pour la mise en oeuvre du procédé selon la présente invention consiste à réaliser la plastification et la fusion des flocons à une température au moins égale à une température supérieure de 100°C à la température de fusion d'équilibre du mélange alcool polyvinylique/eau entrant dans la constitution des flocons.

La température de fusion d'équilibre d'un mélange d'alcool polyvinylique et d'eau peut être calculée à partir de la relation suivante:

$$\frac{10^3}{V\,H_2O} \cdot \left[\frac{1}{T} - \frac{1}{T'}\right] = 3,6 - 0,8 \cdot \frac{V\,H_2O}{T} \cdot 10^3$$

dans laquelle:

$V\,H_2O$ est la fraction volumique de l'eau dans le mélange considéré,

$T$ est la température de fusion d'équilibre (°K) du mélange considéré,

$T'$ est la température de fusion de l'alcool polyvinylique (493°K),

qui est établie sur la base des données figurant dans l'article publié au Journal of Applied Polymer Science, volume 20, pages 1457 - 1465 (1976).

La relation précédente conduit à l'équation:

$$T\,(°K) = 1000\,\frac{1 + 0,8 \cdot V^2\,H_2O}{2,028 + 3,6 \cdot V\,H_2O}$$

Par ailleurs, on peut relier la fraction volumique d'eau $V\,H_2O$ à la fraction pondérale $P\,H_2O$ de la manière suivante:

$$V\,H_2O = \frac{d_{APV} \cdot P\,H_2O}{1 + P\,H_2O \cdot (d_{APV}-1)}$$

avec $d_{APV}$ représentant la densité de l'alcool polyvinylique; en prenant pour $d_{APV}$ la valeur de 1,29, on arrive à la relation:

$$V\,H_2O = \frac{1,29 \cdot P\,H_2O}{1 + 0,29 \cdot P\,H_2O}$$

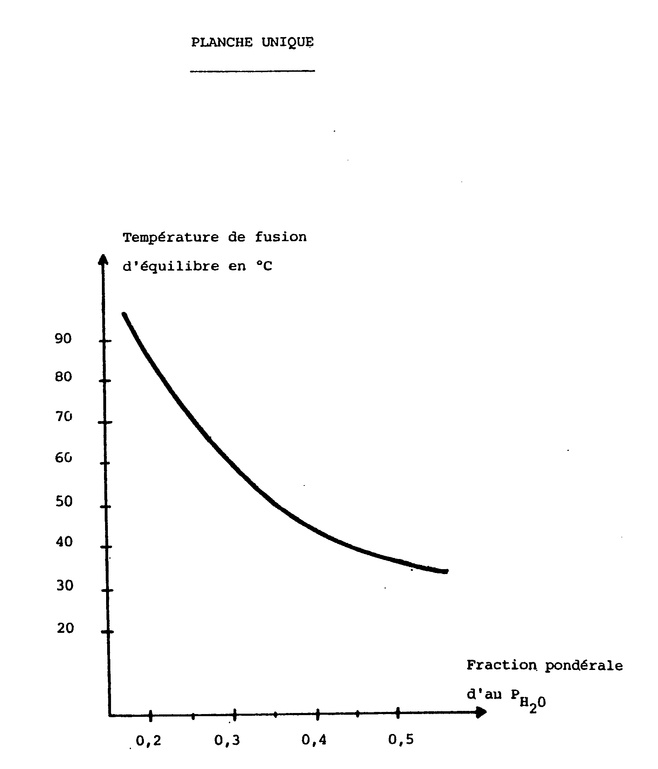

La figure 1 en annexe représente un diagramme typique donnant les valeurs de la température de fusion d'équilibre en °C (T - 273) en fonction de la fraction pondérale p $H_2O$ dans le mélange alcool polyvinylique/eau.

La température de plastification et de fusion des flocons d'alcool polyvinylique est choisie de manière à éviter toute hétérogénéité de phase dans la masse fondue. Cette température est fonction, outre la quantité d'eau utilisée, du taux et de la durée de cisaillement et elle est au moins égale à une température supérieure de 100°C à la température de fusion d'équilibre du mélange alcool polyvinylique/eau considéré. De manière préférentielle, cette température est choisie dans la zone indiquée ci-avant de manière à se situer dans l'intervalle de 150°C à 220°C.

Considérons par exemple des flocons renfermant de l'eau en proportions pondérales voisines de 30% (P $H_2O$ = 0,3). Il convient de noter qu'il s'agit là de proportions qui conviennent tout particulièrement bien pour la mise en oeuvre du procédé selon l'invention. Le diagramme de la figure 1 indique une température de fusion d'équilibre voisine de 60°C. Conformément à ce qui précède, la plastification et la fusion des flocons dans l'extrudeuse se fera à une température au moins égale à 160°C; de préférence, on choisira des températures comprises entre 160°C et 220°C.

Comme on l'a déjà mentionné ci-dessus, une autre des consitions essentielles pour la mise en oeuvre du procédé selon la présente invention réside dans le fait que dans la filière de revêtement le matériau extrudé fondu doit présenter une température matière qui est inférieure à celle à laquelle la tension de vapeur d'eau est suffisante pour provoquer à l'air libre l'expansion du futur revêtement par formation de bulles. De manière plus précise, la température du matériau fondu dans la filière doit être inférieure à 105°C; de préférence cette température est au plus égale à 98°C.

Comme la plastification et la fusion des flocons est opérée à une température supérieure à 105°C, il convient alors de refroidir l'extrudat fondu. Ce refroidissement a lieu avantageusement avant le passage de l'extrudat fondu dans la filière. Le refroidissement doit être réalisé de façon homogène, c'est-à-dire que non seulement les couches superficielles mais la totalité de la veine fondue doivent se trouver portée à la température de refroidissement choisie de façon stable. Les conditions de refroidissement et la répartition des temps de séjour doivent en outre être contrôlées de manière à éviter l'apparition de germes cristallins jusqu'au moment du dépôt sur le substrat en matière thermoplastique. En particulier, la température de l'extrudat fondu ne doit pas être abaissée à une température inférieure à la température de fusion d'équilibre du mélange d'alcool polyvinylique et d'eau considéré.

En définitive, d'après ce qui précède, la température de l'extrudat fondu dans la filière de revêtement doit se situer, en effectuant un refroidissement contrôlé, à una valeur comprise de préférence entre la température de fusion d'équilibre et 98°C. Plus préférentiellement encore, cette température est choisie comprise entre 5°C au dessus de la température de fusion d'équilibre et 98°C.

Conformément à la présente invention, le refroidissement à la température désirée est effectué avant le passage dans la filière à l'aide d'un dispositif refroidisseur-homogénéiseur intercalé entre l'extrémité du fourreau de l'extrudeuse et la filière de revêtement. Un type de dispositif simple, utilisable pour la mise en œuvre de l'invention, peut être trouvé dans les mélangeurs statiques ou dynamiques qui offrent l'avantage de permettre un échange thermique efficace et homogène sans perte de charge élevée et de pouvoir être adaptés, par un choix convenable du nombre, de la géométrie et de la température des éléments, à l'amplitude du refroidissement à réaliser. On trouvera plus de détails sur ce dispositif dans le brevet français n° 2 373 385.

Revenons à l'exemple des flocons renfermant environ 30% en poids d'eau: la température de l'extrudat fondu dans la filière de revêtement doit être au moins égale à 60°C (température de fusion d'équilibre) mais inférieure à 105°C; elle est de préférence comprise entre 60°C et 98°C. Des températures comprises entre 65°C et 98°C conviennent tout particulièrement bien.

L'obtention de bonnes propriétés du revêtement dépend essentiellement du respect des modalités de mise en œuvre décrites ci-avant. A noter que, dans le but de faciliter l'adhésion du revêtement sur le substrat, on peut procéder aussi à un traitement préalable de la surface du matériau thermoplastique par exemple par effet Corona, flammage ou par dépôt d'un «primer» d'accrochage ou adhésif. L'emploi d'une couche intermédiaire d'adhésif est particulièrement recommandé dans le cas où le revêtement est opéré par application d'un manchon sur un tube, une paraison ou une préforme. Comme adhésif, on peut utiliser notamment un adhésif à base de polyuréthane en solution, le depôt de l'adhésif étant suivi d'un léger séchage de manière à éliminer la majorité du solvant sans que la couche intermédiaire n'ait atteint une viscosité trop élevée. A noter que la couche intermédiaire d'adhésif peut tout aussi bien être déposée sur la surface du revêtement qui va être mise en contact avec le matériau thermoplastique de base. En général la teneur en edhésif déposée, mesurée après élimination du solvant, se situe entre environ 1 et 8 g par $m^2$ d'interface matériau thermoplastique de base/revêtement.

A propos de la transformation finale en corps creux biorienté de l'ébauche tubulaire, de la paraison ou de la préforme revêtue selon le procédé de l'invention, on donnera les précisions suivantes.

S'agissant de l'ébauche tubulaire revêtue, alle peut être utilisée telle quelle pour obtenir par biétirage-soufflage des profilés biorientés de grande longueur de sections droite et transversale quelconques en utilisant la technique qui est décrite dans le brevet français n° 2 484 324. Cette technique consiste dans les opérations suivantes: on place l'ébauche tubulaire préchauffée à la température de biorientation de la matière dans l'axe d'un moule ayant la configuration et les dimensions du profilé à obtenir; on exerce une pression interne pour provoquer simultanément l'étirage longitudinal et un pré-gonflement radial réguliers au moins jusqu'au rapport naturel d'étirage biaxial de la matière; on augmente la pression interne pour dilater à fond l'ébauche contre les parois du moule de manière à provoquer un surétirage transversal; on refroidit le profilé puis on relâche la pression. les profilés biorientés obtenus peuvent être utilisés par exemple pour le transport de fluides sous pression, comme tubes protecteurs de luminaires ou après tronçonnage comme corps de boîtes dans l'industrie de l'emballage. Pour la réalisation de corps de boîtes la forme du profilé est choisie de manière à correspondre à la répétition de celle des éléments que l'on désire obtenir. Il peut être avantageux de prévoir une gorge saillante ou cannelure au niveau de chaque élément, le tronçonnage ayant lieu au niveau de la cannelure, ce qui facilite la fixation ultérieure sur les corps de boîtes par sertissage ou soudure des fonds en métal ou en matière plastique exécutés séparément. Les boîtes obtenues peuvent être utilisées avantageusement pour la conservation de liquides fortement carbonatés et de denrées alimentaires très sensibles à l'oxygène.

L'ébauche tubulaire peut être transformée aussi par découpage en paraisons. S'agissant des paraisons revêtues, elles sont en général d'abord fermées au moins à l'une de leurs extrémités soit par matriçage, soit par installation par sertissage ou soudure d'un fond en métal ou en matière plastique avant d'être transformés par biétirage-soufflage en corps creux biorientés (corps de boîtes, flacons, bouteilles, etc...) en faisant appel aux techniques conventionelles connues.

Quant aux préformes revêtues, elles sont directement biétirées-soufflées en faisant appel aux mêmes techniques conventionnelles connues.

La température à laquelle l'ébauche tubulaire, la paraison ou la préforme est chauffée dans l'étape de biétirage-soufflage dépend de la nature de la matière thermoplastique constituant le substrat de base. Si le substrat de base est un polyester, une température comprise entre la température de transition vitreuse et la température de cristallisation, c'est à dire une température comprise entre 85°C et 120°C convient bien en général.

Les corps creux obtenus conservent les caractéristiques des corps creux non revêtus en ce qui concerne leur résistance au choc, leur brillance et leur transparence. S'agissant de l'épaisseur du revêtement, la technique décrite ci-avant, en comparaison avec celle faisant appel à une enduction par voie aqueuse, permet d'obtenir immédiatement avec une seule opération un revêtement plus épais pouvant aller de 10 à 200 $\mu$; les corps creux ainsi revêtus sont maintenant parfaitement adaptés à l'emballage de liquide fortement carbonatés et/ou sensibles à l'oxygène.

Par rapport à la technique antérieure, un autre avantage réside dans le fait que l'on obtient un revêtement plus épais sans se heurter à une quelconque exigence d'élimination d'eau. On a noté en effet, contrairement à ce qui se passe avec l'enduction aqueuse, que les ébauches tubulaires, paraisons ou préformes conformes à l'invention, dont l'épaisseur du revêtement peut aller de 0,1 à 2 mm, sont facilement étirables dans les mêmes conditions d'étirage que celles de la matière thermoplastique non revêtue sans avoir besoin d'effectuer un séchage préalable de la couche de revêtement. Le fait qu'un séchage partiel puisse tout de même intervenir lors du stockage éventuel des tubes, ébauches tubulaires, paraisons ou préformes et/ou lors de leur préchauffage avant biétirage-soufflage ne constitue pas une gêne ni vis-à-vis du comportement à l'étirage, ni vis-à-vis des propriétés des corps creux finis.

On constate encore et il s'agit là d'un point tout à fait surprenant, que le procédé selon la présente invention peut conduire, en respectant les modalités indiquées ci-avant notamment en matière de teneur en eau des flocons et de température de fusion des flocons, à des corps creux dont le revêtement d'alcool polyvinylique est résistant à l'eau sans avoir subi un post-traitement thermique à températures élevées. Par résistant à l'eau, on entend signifier que le revêtement est insoluble dans l'eau froide et ne donne lieu éventuellement qu'à un gonflement, sans dissolution immédiate, lorsqu'il est immergé dans de l'eau portée à une température aussi elevée que 60°C. Avec la technique antérieure d'enduction par voie aqueuse, la résistance à l'eau du revêtement ne pouvait être obtenue qu'à condition de soumettre la couche d'alcool polyvinylique avant ou après biétirage à un traitement thermique à une température supérieure à 130° et de préférence comprise entre 140°C et 210°C. Ce post-traitement thermique avait pour but de développer la cristallinité du revêtement par voie de conséquence d'améliorer ses propriétés physiques dont l'insolubilité dans l'eau. Avec la technique décrite dans la présente invention, on peut obtenir immédiatement un revêtement qui est hautement cristallisé et résistant à l'eau. En écartant le stade d'un post-traitement thermique à des températures supérieures à 130°C et aussi élevées que 140°C à 210°C qui implique de maintenir le substrat revêtu ou le corps creux en contact intime avec les parois d'un moule chaud on simplifie d'autant la technique utilisable par l'homme de l'art.

Dans la partie expérimentale du présent mémoire, la mesure de la cristallinité du revêtement d'alcool polyvinylique, étiré ou non étiré, est faite par le biais de la détermination de son indice de réfraction n (s'il s'agit d'alcool polyvinylique isotrope) ou de son indice moyen de réfraction n (s'il s'agit d'alcool polyvinylique anisotrope) qui est la moyenne arithmétique des trois indices de réfraction principaux, déterminés au réfractomètre D'ABBE en lumière polarisée, dans les directions principales d'orientation dans le plan du film de revêtement ($n_1$, $n_2$) et dans la direction orthogonale ($n_3$).Étant donné que la présence d'eau dans le revêtement d'alcool polyvinylique abaisse de manière significative l'indice de réfraction ou l'indice moyen de réfraction, la mesure de la cristallinité doit être effectué sur un revêtement totalement sec. Afin d'éviter que les conditions de séchage ne viennent modifier la cristallinité du revêtement, on élimine l'eau résiduelle par séchage sous vide, sans dépasser 60°C.

Il est bien entendu possible, sans sortir du cadre de la présente invention, de renforcer encore la protection du revêtement obtenu au moyen d'un autre revêtement de polymère appliqué sur l'ébauche tubulaire, la paraison ou la préforme ou sur l'objet fini. De nouveau revêtement peut être déposé par toutes techniques connues telles que l'enduction à l'aide d'un latex ou d'un polymère fondu, la coextrusion-couchage, le gainage à l'aide d'un polymère fondu. Il est également possible d'appliquer sur le corps creux un manchon de polymère étirable ou rétractable, la mise en œuvre pouvant être réalisée notamment sur la chaîne d'embouteillage, avant ou après remplissage. Le manchon peut être réalisé par découpage transversal d'une gaine obtenu soit par extrusion-gonflage (cas le plus courant des gaines polyéthylène basse densité, polypropylène, éthylène-acétate de vinyle, résine ionomère, copolymère d'acrylonitrile) soit à partir d'un film plat roulé sur lui-même et sudé ou collé (cas du PVC et du polychlorure de vinylidène). Bien entendu le manchon peut contenir divers adjuvants notamment colorants et absorbants UV, il peut être transparent ou opaque, imprimé ou non. Il n'est pas nécassaire que le manchon recouvre la totalité de la surface du corps creux. Par exemple dans le cas de bouteilles ou flacons seule la partie cylindrique droite peut être protégée à l'exclusion du fond et du goulot.

Les exemples suivants illustrent l'invention sans en limiter la portée.

*Exemple 1*

Il s'agit d'un exemple comparatif montrant ce qui se passe quand on fait appel à la technique utilisant l'enduction par voie aqueuse.

On utilise un alcool polyvinylique du commerce portant la marque RHODOVIOL 30-5 de la Société RHONE-POULENC et présentant les caractéristiques suivantes:

— indice d'ester: 5 (soit un taux d'hydrolyse de 99% en poids ou 99,5% en mole),

— viscosité d'une solution à 4% en poids mesurée à 20°C au viscosimètre OSTWALD: 28 centipoises,

— teneur en cendres: < 1% en poids,

— taux de syndiotacticité: 54% de triades syndiotactiques; la mesure est effectuée à 80°C dans l'eau lourde au spectromère RMN C VARIAN CFT 10 selon la méthode de INOUE et al [Polymer Journal (1973) page 244] et WU et OVENAL [Macromolecules (1973) page 582],

— enchaînements glycol-1,2: 0,66 enchaînements pour unités monomères,

pour réaliser une solution aqueuse à 15% (poids polymère/poids solution) qui est utilisée à 50°C pour revêtir, par trempage, des préformes injectées transparentes en polytéréphtalate d'éthylène (polymère RHODESTER 85 TX de la Société RHONE-POULENC possédant une viscosité intrinsèque de 0,83 dl/g). Après trempage et égouttage, on obtient un revêtement relativement uniforme des préformes dont l'épaisseur moyenne, au contrôle effectué après séchage complet, est de 27 $\mu$.

On contrôle par ailleurs l'état cristallin du revêtement séché à 60°C à l'étuve à vide jusqu'à poids constant. La mesure s'effectue au réfractomètre d'ABBE à 23°C, en recherchant les valeurs extrêmes de l'indice de réfraction $n_1$ et $n_2$ dans le plan du film, et la valeur $n_3$ mesurée perpendiculairement au plan du film.

Ces valeurs sont:

$n_1 = 1,5299$

$n_2 = 1,5299$    soit $\bar{n} = 1,5293$

$n_3 = 1,5282$

On teste les qualités mécaniques et la résistance à l'eau d'un fragment de revêtement d'alcool polyvinylique ainsi obtenu, après l'avoir séparé du support en polyester; on obtient les résultats suivants:

— module d'élasticité en traction (mesuré à 23°C sur produit séché) : E = 5885 MPa

— résistance à l'eau:

. immersion du fragment de revêtement dans l'eau à 20°C: on observe une lente mais totale dissolution;

. immersion dans de l'eau à 60°C pendant 15 minutes: on observe une rapide dissolution.

La mauvaise résistance à l'eau du revêtement des préformes apparait également au contact de doigts humides: l'empreinte initiale se traduit rapidement par une perforation du revêtement par simple frottement à température ambiante.

On utilise les préformes ainsi revêtues pour la fabrication de bouteilles de grande capacité (1,5 l) par biétirage sous pression d'air, après préchauffage des préformes revêtues dans un four à air chaud à 100°C.

Les rapports d'étirage subis par le revêtement sont respectivement de 2,5 dans le sens longitudinal et 3,8 dans le sens transversal, ce qui ramène l'épaisseur du film d'alcool polyvinylique de 27 à 2,84 $\mu$ (à l'état sec).

La moule de soufflage étant froid, le démoulage s'effectue immédiatement après soufflage. On obtient une bouteille qui présente un bel aspect, transparente, dont les caractéristiques de cristallinité du revêtement extérieur sont analysées à l'aide du refractomètre. Etant donné que l'étirage a réduit l'épaisseur du polyester à une valeur proche de 300 $\mu$, il est maintenant possible d'analyser les caractéristiques optiques du revêtement sans le séparer du support en polyester étiré. On découpe à cet effet dans la partie médiane de la bouteille un disque de 5 mm de diamètre à l'aide d'un emporte pièce, et on prend soin de placer au contact du prisme de mesure la face revêtue d'alcool polyvinylique.

On constate que les valeurs mesurées sur le film étiré évoluent encore sensiblement si l'on complète le séchage du film et se stabilisent aux valeurs suivantes sur un échantillon séché à 60°C à l'étuve à vide:

$n_1 = 1,5370$

$n_2 = 1,5330$    soit $\bar{n} = 1,5290$

$n_3 = 1,5170$

Un essai de résistance à l'eau à température ambiante du film étiré, effectué par simple mise en contact de la bouteille avec des mains humides, montre une grande sensibilité du revêtement qui se désagrège rapidement. Par immersion dans l'eau à 60°C pendant 15 minutes d'un échantillon du revêtement séparé du support, on observe une complète dissolution de ce dernier.

Dans ce qui suit on va illustrer l'influence d'un post-traitement thermique sur l'évolution de la cristallinité et de la résistance à l'eau du revêtement d'alcool polyvinylique non étiré et étiré:

*Revêtement non etiré:*

On prélève au niveau de la préforme des échantillons du revêtement d'alcool polyvinylique non étiré et séparé du polyester, qui sont successivement séchés à 60°C sous vide puis traités thermiquement à des températures crosissantes allant de 100°C à 170°C; la durée du traitement est de 10 minutes et on veille à ce que les échantillons soient en contact intime avec les plaques métalliques chauffantes utilisées pour ce traitement.

On obtient les valeurs suivantes pour l'indice de réfraction moyen des échantillons ainsi traités et pour leur résistance à l'eau à 60°C pendant 15 minutes:

| température | $\bar{n}$ | Résistance à l'eau |
|---|---|---|
| 100°C | 1,5356 | solubilité |
| 120°C | 1,5378 | très légère solubilité |
| 130°C | 1,5406 | insolubilité |
| 150°C | 1,5421 | insolubilité |
| 170°C | 1,5433 | insolubilité |

*Revêtement étiré:*

On utilise une série de bouteilles de 1,5 l préparées comme indiqué ci-avant. Ces bouteilles sont traitées thermiquement à des températures croissantes allant de 100°C à 170°C. Pour ce faire chaque bouteille est mise, pendant 15 secondes, en contact intime par l'emploi de la pression avec la parois d'un moule chauffé à la température choisie. Après le traitement thermique, on découpe dans la partie médiane de chaque bouteille un disque de 5 mm de diamètre comprenant l'ensemble substrat-revêtement. Les échantillons recueillis sont séchés à 60°C sous vide, puis on soumet chacun d'eux à la mesure de l'indice de réfraction moyen. S'agissant du test de résistence à l'eau, il est effectué par immersion dans l'eau à 60°C pendant 15 minutes d'un fragment de revêtement séparé du substrat en polyester par arrachement. On obtient les résultats suivants:

| température du moule | $\bar{n}$ | Résistance à l'eau |
|---|---|---|
| 100°C | 1,5298 | solubilité |
| 120°C | 1,5342 | solubilité |
| 140°C | 1,5372 | insolubilité |
| 160°C | 1,5387 | insolubilité |
| 170°C | 1,5402 | insolubilité |

Il apparait donc, pour ce type de revêtement en alcool polyvinylique déposé par enduction aqueuse, qu'il est nécessaire d'effectuer un post-traitement thermique sévère pour obtenir un revêtement étiré ou non résistant à l'eau. On estime que le revêtement non étiré devient résistant à l'eau pour des valeurs de l'indice de réfraction moyen supérieures à 1,5380. S'agissant du revêtement étiré, on estime qu'il devient résistant à l'eau pour des valeurs de l'indice de réfraction moyen supérieures à 1,5360. Lorsque le revêtement est résistant à l'eau, on n'observe plus au contact de doigts humides de désagrégation ni de perforation du film d'alcool polyvinylique.

*Exemple 2*

On utilise le même grade d'alcool polyvinylique RHODOVIOL 30-5 en poudre pour préparer des flocons contenant environ 30% en poids d'eau en vue de leur extrusion sans autre additif plastifiant. Au préalable on lave à froid la poudre d'alcool dans une centrifugeuse, puis on introduit la quantité d'eau en excès d'environ 10% par rapport à celle visée dans un mélangeur lent à pales en forme de sigma (appareil de la Société GUITTARD). La cuve de l'appareil est portée à 80°C par l'intermédiaire d'une double enveloppe, et on maintient l'agitation pendant 1 heure une fois que la température du matériau humide a atteint 75°C.

Une fois ce malaxage terminé, la cuve est refroidie par sa double enveloppe et le produit ainsi imprégné de façon homogène est vidangé. Il présente une bonne aptitude à l'écoulement, sans la moindre tendance au collage des flocons. La teneur en eau contrôlée par perte de poids à l'étuve est comprise entre 31 et 31,6%. Les flocons sont stockés dans un sac fermé pour être conservés sans perte d'eau jusqu'à l'essai d'extrusion.

L'alcool polyvinylique ainsi gonflé d'eau est alimenté dans la trémie d'une extrudeuse monovis de type ANDOUART (diamètre 60 mm, longueur 20 D) à 3 zones de chauffage, équipée d'une filière annulaire qui permet de distribuer le flux de matériau de façon périphérique autour d'un tube qui est guidé de façon concentrique à l'axe de la filière. On interpose entre l'extrémité du fourreau et la filière un mélangeur statique de type ROSS, composé de 5 éléments de diamètre égal à 2 pouces disposés dans un fourreau chauffé électriquement suivant deux zones à contrôle séparé. Le profil des températures de l'extrudat est équilibré dans les conditions de marche régulière comme suivant:
— Extrudeuse: entrée: 90°C
               milieu du corps de l'extrudeuse:
               200 - 210°C
               extrémité: 170°C
— Dispositif de refroidissement:
               1ère zone: 110°C
               2ème zone: 95°C
— Filière:     95°C

La vitesse de rotation de la vis est fixée à 27 tours/minute. En raison de la perte de charge de la filière, dont l'ouverture est calibrée pour un dépôt dont l'épaisseur nominale (à l'état non étiré) est de 800 $\mu$, le débit du produit extrudé est de l'ordre de 6 kg/heure.

L'alcool polyvinylique est déposé sur un tube extrudé de polytéréphthalate d'éthylène amorphe préparé séparément, à partir de RHODESTER 85 TX de la Société RHONE-POULENC, le diamètre extérieur du tube est de 24,8 mm. On fixe la vitesse de défilement du tube de manière à ajuster l'épaisseur du revêtement à une valeur de 450 $\mu$, épaisseur contrôlée sur le tube revêtu et séché.

Le revêtement obtenu est parfaitement transparent, exempt de bulles ou de grains et il n'apparait pas de ligne de ressoudures due à la séparation du flux dans la filière. En outre on constate qu'il est possible de saisir les tubes revêtus dès que le revêtement est revenu à température ambiante, car il ne présente pas un caractère collant ou poisseux. Dans ces conditions les tubes revêtus peuvent être découpés à la scie sans risque de détérioration du revêtement due au contact des systèmes de transfert.

De manière à contrôler l'état cristallin de l'alcool polyvinylique ainsi extrudé, on sèche à 60°C sous vide un fragment de revêtement que l'on soumet au contrôle de l'indice de réfraction. On obtient après élimination de toute humidité résiduaire:
$$n_2 = 1,5460$$
$$n_2 = 1,5400 \qquad \text{soit } \overline{n} = 1,5413$$
$$n_3 = 1,5380$$

L'essai dynamométrique effectué sur ce matériau laisse apparaître un accroissement sensible de son module d'élasticité qui s'élève à 6750 MPa par rapport au témoin obtenu à partir d'une solution aqueuse (cf. exemple 1).

L'essai de résistance à l'eau montre que ce revêtement est insoluble à température ambiante (20°C) et ne se modifie pas au contact des doigts humides. Par immersion dans l'eau à 60°C pendant 15 minutes, le revêtement demeure insoluble.

On utilise deux lots de tubes de polyester revêtus comme indiqué ci-avant pour la confection de bouteilles biorientées en utilisant successivement deux modes de fermetures.

*Premier mode:*

Le lot de tubes concerné est constitué par des tubes présentant une épaisseur initiale de polyester de 0,8 mm. Ils sont découpés à une longueur de 10 cm. Dans ce premier mode, on installe par sertissage des inserts métalliques aux deux extrémités de chaque section de tube. L'un de ces inserts est une pièce métallique borgne servant de fond, l'autre insert sert de col et est évidé. On effectue le préchauffage de ces paraisons à l'air chaud à 100°C et leur soufflage au sein d'un moule métallique froid. Dans cette opération le matériau est peu étiré dans le sens longitudinal, et le rapport d'étirage transversal est inférieur à 3 (entre 2,6 et 2,9).

On analyse après séchage à 60°C sous vide les indices de réfraction du produit étiré, en découpant un échantillon de paroi à la partie médiane des bouteilles obtenues et en veillant à ce que la surface au contact du prisme du réfractomètre soit bien celle revêtue:
les valeurs obtenues sont les suivantes:
$$n_1 = 1,5420$$
$$n_2 = 1,5380 \qquad \text{soit } \overline{n} = 1,5382$$
$$n_3 = 1,5345$$

Le revêtement est parfaitement insensible au toucher des doigts humides, et insolubles dans l'eau à température ambiante (20°C). Il est insoluble aussi dans l'eau à 60°C pendant 15 minutes.

*Deuxième mode:*

On utilise le second lot de tubes revêtus présentant une épaisseur initale de polyester de 3,5 mm pour réaliser après découpage, par préchauffage et matriçage du fond et du col sur machine de laboratoire CORPOPLAST VBE 3, des préformes fermées à une extrémité pouvant être soufflées.

Ces préformes sont utilisées pour le soufflage de bouteilles de capacité 1,5 l, d'un poids de 55 g et elles subissent un taux d'étirage qui réduit l'épaisseur du matériau et de son revêtement dans un rapport de 1 à 9,5 pour la partie centrale.

Le préchauffage des préformes est effectué au contact d'un moule métallique en deux demi coquilles chauffants qui assure une bonne répartition de la chaleur au sein de la préforme; la température de soufflage est de 95°C. La teneur en humidité de l'alcool polyvinylique au moment du soufflage est trouvée égale à 1,6% en poids.

Après biétirage le revêtement présente une épaisseur moyenne de 47 $\mu$. Sans qu'aucun problème particulier n'apparaisse, on peut effectuer le soufflage à diverses conditions de températures comprises entre 90°C et 110°C, comme avec une préforme de polyester non revêtue. Les bouteilles obtenus présentent un aspect brillant et lisse. On observe qu'il n'y a pas de nécessité à effectuer au préalable un séchage des préformes dont la teneur en eau au stade du biétirage peut varier significativement sans nuire à la qualité du soufflage.

On mesure après séchage sous vide à 60°C l'indice de réfraction du revêtement étiré, la mesure s'effectuant directement sur l'ensemble bouteille/revêtement à partir d'un échantillon découpé à l'emporte pièce.

On obtient:

$n_1 = 1,5510$
$n_2 = 1,5360$     soit $\bar{n} = 1,5377$
$n_3 = 1,5260$

Bien que sous l'effet d'un étirage plus marqué on obtienne une valeur moyenne sensiblement inférieure à celle enregistrée dans le premier mode, la cristallinité du revêtement est largement suffisante pour donner un revêtement résistant à l'eau à 20°C ou au toucher de mains humides qui n'en affecte ni l'aspect ni la tenue. Ce revêtement est aussi résistant à l'eau à 60°C pendant 15 minutes.

### Exemple 3

On reprend les mêmes conditions de préparation de flocons d'alcool polyvinylique que celles décrites dans l'exemple 2, mais on abaisse maintenant la température d'extrusion ANDOUARD de manière à ce que la température dans le corps central ne dépasse pas 140°C, c'est-à-dire une température supérieure d'environ 82°C seulement à la température de fusion d'équilibre du mélange d'alcool polyvinylique et d'eau considéré.

On observe des difficultés à l'écoulement du produit dans la filière maintenue à 95°C, en raison de l'apparition d'un état de surface plus rugueux du film revêtu. On contrôle l'indice de réfraction du revêtement sur un fragment d'alcool polyvinylique non·étiré, préalablement séparé du tube et séché jusqu'à poids constant, à 60°C sous vide.

On obtient:

$n_1 = 1,5400$
$n_2 = 1,5990$     soit $\bar{n} = 1,5373$
$n_3 = 1,5330$

Ce revêtement ne s'avère pas complètement résistant à l'eau.

### Exemple 4

On reproduit les essais décrits dans l'exemple 2 en choisissant le deuxième mode pour ce qui est de la fabrication de l'article creux et en utilisant un alcool polyvinylique portant la marque POVAL H de la Société KURARAY. Il présente les caractéristiques suivantes:

— indice d'ester: 5

— viscosité d'une solution aqueuse à 4% en poids: 30 centipoises,

— teneur en cendres: < 1% en poids,

— taux de syndiotacticité: 52,5%

— enchaînements glycol-1,2: 0,40 pour 100 unités monomères.

On prépare des flocons contenant 35% en poids d'eau à l'aide du mélangeur GUITTARD et on extrude les flocons à 210° sur extrudeuse ANDOUART en veillant à ramener la température du matériau extrudé à 95°C avant son passage dans la filière. On effectue les tests de contrôle habituels sur la préforme·revêtue et sur une bouteille biorientée à 100°C ayant subi un étirage planaire de 11,5. On obtient dans les deux cas un revêtement directement résistant à l'eau, dont l'indice moyen de réfraction mesuré après séchage à 60°C sous vide jusqu'à élimination de l'eau s'élève à 1,5420 sur la préforme et 1,5380 sur la bouteille.

### Exemple 5

A partir d'alcool polyvinylique du type RHODOVIOL 30-5 de la Société RHONE-POULENC on prépare des flocons contenant une quantité accrue d'eau: la teneur en eau des flocons est portée à 55% en poids. A la sortie du mélangeur, on observe que les flocons présentent une tendance marquée à s'agglomérer, ce qui rend l'alimentation de l'extrudeuse ANDOUARD difficile et irrégulière.

En raison de la teneur élevée en eau des flocons, on extrude directement le produit sans l'intermédiaire d'un dispositif refroidisseur du type ROSS, car la température dans le corps de l'extrudeuse est fixée dans ce cas à 135°C. En jouant simplement sur le débit de l'extrudat fondu, il est possible d'amener sa température dans la filière à la valeur de 95°C souhaitée. L'alcool polyvinylique est déposé sur un tube extrudé fait avec le même polytéréphthalate d'éthylène que celui mentionné dans les exemples précédents.

On observe que les tubes ainsi revêtus ont tendance à donner lieu à un fort collage du revêtement refroidi mais non séché et sont par suite difficilement utilisables.

On contrôle l'indice de réfraction du revêtement non étiré séché à 60°C sous vide:

$n_1 = 1,5360$
$n_2 = 1,5340$     soit $\bar{n} = 1,5333$
$n_3 = 1,5300$

Le revêtement se révèle soluble dans l'eau à 20°C. On effectue un étirage uniaxial sur un échantillon de revêtement isolé en le préchauffant à 95°C à l'aide d'un four à air chaud. Sous un rapport d'étirage de 4 on obtient un film qui présente les valeurs suivantes d'indice une fois séché à 60°C sous vide:

$n_1 = 1,5470$
$n_2 = 1,5280$     soit $\bar{n} = 1,5327$
$n_3 = 1,5230$

L'échantillon étiré est encore soluble dans l'eau à 20°C.

*Exemple 6*

A partir de l'alcool polyvinylique RHODOVIOL 30-5 décrit à l'exemple 1, on prépare des flocons contenant environ 30% en poids d'eau, puis on réalise par extrusion une gaine d'alcool polyvinylique présentant un diamètre de 25 mm et une épaisseur de paroi de 300 $\mu$. La plastification du mélange alcool polyvinylique-eau, son malaxage et son extrusion à haute température suivie d'un refroidissement avant le passage dans la filière s'effectuent dans les conditions décrites à l'exemple 2.

On réceptionne la gaine formée lors du passage dans la filière annulaire, non pas sur un support interne (tube guidé de façon concentrique à l'axe de la filière, dans l'exemple 2), mais sur un conformateur mobile qui enveloppe la gaine de part et d'autre par le biais de deux demi-moules à parois lisses qui constituent les éléments opposés des parties inférieure et supérieure d'une chenillette mobile. La gaine formée ayant été pincée à son extrémité, une insufflation d'air à l'intérieur permet d'obtenir son gonflage à l'intérieur de ce moule en mouvement.

On découpe la gaine formée en éléments de longueur égale à 100 mm. Ces éléments sont soumis à un séchage modéré à 60°C en étude pendant 60 minutes. On pulvérise ensuite à l'intérieur de ces manchons une solution à 10% en poids d'adhésif PENTA-COLL ET 691 A de la Société WIKOLIN dans de l'acétate d'éthyle et, après un léger séchage le l'intérieur des manchons, on rapporte ces éléments adhésivés à l'extérieur de la partie droite de préformes en polytéréphtalate d'éthyléne amorphe pesant 55 g et présentant une épaisseur initiale de polyester de 3 mm ainsi qu'un diamètre extérieur de 24,8 mm. Ces préformes sont péparées par injection à partir de RHODESTER 85 TX de la Société RHONE-POULENC. On recouvre ainsi la totalité de la partie droite étirable de la préforme s'étendant entre la base du col et le fond (100 mm). La teneur en adhésif déposé, mesurée après élimination du solvant, se situe entre 2 et 5 g par m$^2$ de gaine ainsi rapportée.

Les préformes ainsi revêtues sont stockées 24 heures à température ambiante (20°C), puis biétirées (rapport d'étirage longitudinal : 2,5; rapport d'étirage transversal: 4) à 95°C, apres un préchauffage effectué dans un four à air chaud.

On n'observe sur les bouteilles biorientées ainsi formées aucun défaut d'aspect qui pourrait revéler des amorces de rupture on un manque de cohésion de la couche d'alcool polyvinylique ainsi rapportée et biétirée.

Afin de tester les propriétés barrière du complexe ainsi réalisé on découpe dans les parois de la bouteille un disque et on contrôle par chromatographie en phase gazeuse sa perméabilité à l'oxygène, l'épaisseur de l'échantillon utilisé étant de 320 $\mu$ dont 20 $\mu$ d'alcool polyvinylique. Les mesures effectuées suos des conditions d'équilibre à 30°C et à 60 % d'humidité relative montrent que la perméabilité à l'oxygène de la paroi est réduite dans un rappot de 1 à 6 par rapport à celle d'un témoin en polyester non revêtu d'alcool polyvinylique.

Ces excellentes performances obtenues à 60 % d'umidité relative permettent de confirmer encore la très bonne résistance à l'eau du revêtement conforme à la présente invention.

**Revendications**

1. Procédé d'obtention de corps creux biorienté en matière thermoplastique comprenant d'abord la fabrication d'une ébauche tubulaire, d'une paraison ou d'une préforme revêtue d'un matériau barrière à base d'alcool polyvinylique, puis le biétirage-soufflage de ladite ébauche tubulaire, paraison ou préforme dans les conditions usuelles de température de la biorientation, ledit procédé étant caractérisé en ce que la fabrication de l'ébauche tubulaire, paraison ou préforme revêtue fait appel à l'enchaînement des étapes suivantes:

(a) introduction dans une extrudeuse de flocons constitués d'alcool polyvinylique ayant un degré de pureté élevé et d'eau, la teneur pondérale en eau desdits flocons étant comprise entre 20% et 50%,

(b) plastification par cisaillement et fusion des flocons à une température au moins égale à une température supérieure de 100°C à la température de fusion d'équilibre du mélange d'alcool polyvinylique et d'eau constituant les flocons pour éviter toute hétérogénéité de phase dans le masse fondue,

(c) extrusion de la matière fondue à travers une filière de revêtement appropriée pour enduire un tube, une paraison ou une préforme en matière thermoplastique en veillant, en effectuant un refroidissement, à ce que la température de l'extrudat fondu dans la filière se situe à une valeur qui est au moins égale à la température de fusion d'équilibre du mélange d'alcool polyvinylique et d'eau considéré mais est inférieure à celle à laquelle la tension de vapeur de l'eau est suffisante pour provoquer à l'air libre l'expansion du futur revêtement par formation de bulles, ledit refroidissement étant opéré de façon homogène, avant le passage de l'extrudat fondu dans la filière, à l'aide d'un dispositif consistant en un refroidisseur-homogénéiseur intercalé entre l'extrémité du fourreau de l'extrudeuse et la filière de revêtement,

(d) réception du tube, de la paraison ou de la préforme ainsi revêtu, suivie dans le cas d'un tube de sa transformation en ébauches tubulaires, en paraisons ou en sections de tube précurseurs de préformes par tronçonnement à la longueur désirée.

2. Procédé selon la revendication 1, caractérisé en ce que l'on effectue, après les étapes (a) et (b) précitées et à la place de l'étape (c) précitée, les opérations suivantes:

(e) extrusion-gonflage de la matière fondue à travers une filière annulaire dans les conditions de température définies ci-avant pour former une gaine,

(e') ou bien extrusion de la matière fondue sous forme d'un tube suivie d'une opération de calibrage, selon la technique de fabrication des tubes annelés, à l'aide d'un conformateur mobile à parois lisses en utilisant une légère pression interne d'air pour former la gaine souhaitée,

(f) et emploi de ladite gaine, éventuellement après découpage transversal, comme manchon applicable sur un tube, une paraison ou une préforme.

3. Procédé selon l'une quelconque des revendications 1 et 2, caractérisé en ce que l'on utilise un alcool polyvinylique présentant un indice d'ester inférieur à 20, un taux de syndiotacticité supérieur à 50 % en poids, une teneur en cendres inférieure à 1,5% en poids et une proportion d'enchaînements glycol-1,2 inférieure à 1,5 enchaînements de ce type pour 100 unités monomères.

4. Procédé selon l'une quelconque des revendications 1 à 3, caractérisé en ce que la teneur pondérale en eau des flocons d'alcool polyvinylique est comprise entre 25% et 35%.

5. Procédé selon l'une quelconque des revendications 1 à 4, caractérisé en ce que la température de l'extrudat fondu dans la filière de revêtement se situe à une valeur à 105°C.

6. Procédé selon la revendication 5, caractérisé en ce que la température de l'extrudat fondu dans la filière de revêtement se situe à une valeur qui est comprise entre la température de fusion d'équilibre du mélange d'alcool polyvinylique et d'eau considéré et 98°C.

7. Procédé selon l'une quelconque des revendications 1 et 3 à 6, caractérisé en ce que dans l'étape (c) on procède à l'extrusion de la matière fondue, à travers une filière de revêtement appropriée, sur un tube en matière thermoplastique.

8. Procédé selon l'une quelconque des revendications 2 à 6, caractérisé en ce que dans l'étape (f) on procède à l'application d'un manchon en alcool polyvinylique sur une préforme en matière thermoplastique.

9. Procédé selon l'une quelconque des revendications 1 à 8, caractérisé en ce que la matière thermoplastique constituant le substrat de base est un polytéréphthalate d'alkylèneglycol.

## Patentansprüche

1. Verfahren zur Herstellung von biorientierten Hohlkörpern aus thermoplastischem Material, bei welchem zuerst ein rohrförmiger Rohling oder Vorformling, der mit einer Sperrschicht auf Basis von Polyvinylalkohol überzogen ist, hergestellt wird, welcher rohrförmige Rohling oder Vorformling unter den üblichen Temperaturbedingungen der Biorientierung unter Streckung in zwei Richtungen blasgeformt wird, welches Verfahren dadurch gekennzeichnet ist, dass die Herstellung des überzogenen rohrförmigen Rohlings oder Vorformlings die Aufeinanderfolge folgender Stufen umfasst:

(a) Einbringen von Flocken, bestehend aus Polyvinylalkohol mit einem hohen Reinheitsgrad und Wasser, in eine Strangpresse, wobei der Wassergehalt der Flocken zwischen 20 und 50 Gew.-% liegt,

(b) Plastifizierung der Flocken durch Scherwirkung und Schmelzen bei einer Temperatur von zumindest gleich einer Temperatur von mehr als 100°C bis zur Gleichgewichtsschmelztemperatur der Mischung von Polyvinylalkohol und Wasser, die die Flocken bildet, um jede Heterogenität der Phase in der Schmelze zu vermeiden,

(c) Extrusion der Schmelze durch ein geeignetes Spritzmundstück für einen Überzug, um ein Rohr, einen Rohling oder einen Vorformling zu überziehen, indem man unter Durchführung einer Abkühlung darauf achtet, dass sich die Temperatur des geschmolzenen Extrudats im Spritzmundstück auf einem Wert befindet, der zumindest gleich der Gleichgewichtsschmelztemperatur der in Rede stehenden Mischung von Polyvinylalkohol und Wasser, jedoch niedriger als jener ist, bei welchem der Wasserdampfdruck ausreicht, um im Freien die Expansion der künftigen Beschichtung durch Blasenbildung hervorzurufen, welche Abkühlung mittels einer zwischen das Ende der Hülse der Strangpresse und das Spritzmundstück für den Überzug zwischengeschalteten Einrichtung, bestehend aus einem Kühl- und Homogenisierapparat, auf homogene Weise ausgeführt wird,

(d) Abnahme des so beschichteten Rohres, des Rohlings oder des Vorformlings, gefolgt im Falle eines Rohres von seiner Umwandlung in rohrförmige Vorformlinge, in Rohlinge oder in Rohrabschnitte, die Vorläufer von Vorformlingen sind, durch Teilen in gewünschter Länge.

2. Verfahren nach Anspruch 1, dadurch gekennzeichnet, dass man nach den erwähnten Stufen (a) und (b) und anstelle der erwähnten Stufe (c) die folgenden Arbeitsgänge ausführt.

(e) Extrusionsblasen des geschmolzenen Materials durch ein ringförmiges Spritzmundstück unter den zuvor angegebenen Temperaturbedingungen unter Bildung einer Hülse,

(e') oder Extrusion des geschmolzenen Materials in Form eines Rohres, gefolgt von einem Kalibriervorgang nach der Technik der Herstellung von kalibrierten Rohren mittels einer mobilen Kühlvorrichtung mit glatten Wänden unter Verwendung eines leichten internen Luftdrucks unter Bildung der gewünschten Hülse,

(f) Verwendung der Hülse, gegebenenfalls nach Durchschneiden in Querrichtung als auf einen Schlauch, einen Rohling oder einen Vorformling aufbringbare Manschette.

3. Verfahren nach einem der Ansprüche 1 und 2, dadurch gekennzeichnet, dass man einen Polyvinylalkohol verwendet, der einen Esterindex unter 20, einen Syndiotaktizitätsgrad von mehr als 50 Gew.-%, einen Aschegehalt unterhalb 1,5 Gew.-% und einen Anteil an 1,2-Glykolketten von weniger als 1,5 Ketten dieses Typs pro 100 Monomereinheiten aufweist.

4. Verfahren nach einem der Ansprüche 1 bis 3, dadurch gekennzeichnet, dass der Wassergehalt der Polyvinylalkoholflocken 25 bis 35 Gew.-% beträgt.

5. Verfahren nach einem der Ansprüche 1 bis 4, dadurch gekennzeichnet, dass die Temperatur des geschmolzenen Extrudats in dem Spritzmundstück für den Überzug sich auf einem Wert unterhalb 105°C befindet.

6. Verfahren nach Anspruch 5, dadurch gekennzeichnet, dass sich die Temperatur des geschmolzenen Extrudats in dem Spritzmundstück für den Überzug auf einem Wert befindet, der zwischen der Gleichgewichtsschmelztemperatur der in Rede stehenden Mischung von Polyvinylalkohol und Wasser und 98°C liegt.

7. Verfahren nach einem der Ansprüche 1 und 3 bis 6, dadurch gekennzeichnet, dass man in der Stufe (c) die Extrusion des geschmolzenen Materials durch ein geeignetes Spritzmundstück auf einem Rohr aus thermoplastischem Material ausführt.

8. Verfahren nach einem der Ansprüche 2 bis 6, dadurch gekennzeichnet, dass man in der Stufe (f) die Aufbringung einer Manschette aus Polyvinylalkohol auf einen Vorformling aus thermoplastischem Material ausführt.

9. Verfahren nach einem der Ansprüche 1 bis 8, dadurch gekennzeichnet, dass das das Grundsubstrat bildende thermoplastische Material ein Polyalkylenglykoltherephthalat ist.

## Claims

1. Process for the manufacture of bioriented hollow bodies made of thermoplastic, comprising firstly the manufacture of a tubular blank, a parison or a preform, covered with a barrier material based on polyvinyl alcohol, and then the biaxial stretching-blowing of the said tubular blank, parison or preform under the customary temperature conditions for biorientation, the said process being characterised in that the manufacture of the covered tubular blank, parison or preform involves the following series of steps:

(a) the introduction, into an extruder, of flakes consisting of polyvinyl alcohol having a high degree of purity, and of water, the water content of the said flakes being between 20% and 50%,

(b) the fluxing, by shearing, and the melting of the flakes, at a temperature at least 100°C above the equilibrium melting point of the polyvinyl alcohol/water mixture constituting the flakes so as to avoid any phase heterogeneity in the molten mass,

(c) the extrusion of the molten material through a covering die suitable for coating a tube, a parison or a preform made of thermoplastic, care being taken to ensure, by cooling, that the temperature of the molten extrudate in the die has a value which is at least equal to the equilibrium melting point of the polyvinyl alcohol/water mixture in question, but is below the temperature at which the vapour pressure of the water is sufficient to cause the expansion of the intended covering, in the open air, by the formation of bubbles, the said cooling being carried out homogeneously, before the molten extrudate passes through the die, by means of a device consisting of a cooler-homogeniser interposed between the end of the extruder barrel and the covering die,

(d) the taking-up of the tube, parison or preform covered in this way, followed, in the case of a tube, by its conversion to tubular blanks, parisons or sections of tube which are precursors of preforms, by cutting to the desired length.

2. Process according to claim 1, characterised in that the following operations are carried out after the abovementioned steps (a) and (b) and in place of the abovementioned step (c):

(e) the extrusion-blowing of the molten material through an annular die under the temperature conditions defined above, in order to form a casing, or alternatively

(e') the extrusion of the molten material in the form of a tube, followed by a calibration operation, in accordance with the technique for the manufacture of tube rings, with the aid of a movable shaper with smooth walls, using a slight internal air pressure, in order to form the desired casing, and

(f) the use of the said casing, if appropriate after transverse cutting, as a sleeve which can be applied to a tube, a parison or a preform.

3. Process according to either one of claims 1 and 2, characterised in that the polyvinyl alcohol used has an ester number of less than 20, a degree of syndiotacticity of more than 50% by weight, an ash content of less than 1.5% by weight and a proportion of 1,2-glycol linkages of less than 1.5 linkages of this type per 100 monomer units.

4. Process according to either one of claims 1 to 3, characterised in that the water content of the polyvinyl alcohol flakes is between 25% and 35% by weight.

5. Process according to either one of claims 1 to 4, characterised in that the temperature of the molten extrudate in the covering die has a value below 105°C.

6. Process according to claim 5, characterised in that the temperature of the molten extrudate in the covering die has a value which is between the equilibrium melting point of the mixture of polyvinyl alcohol and water in question and 98°C.

7. Process according to any one of claims 1 and 3 to 6, characterised in that, in step (C), the molten material is extruded, through a suitable covering die, onto a tube made of thermoplastic.

8. Process according to any one of claims 2 to 6, characterised in that, in step (f), a sleeve made of polyvinyl alcohol is applied to a preform made of thermoplastic.

9. Process according to any one of claims 1 to 8, characterised in that the thermoplastic constituting the base substrate is a poly-(alkylene glycol), terephthalate.

PLANCHE UNIQUE

Température de fusion
d'équilibre en °C

Fraction pondérale
d'au $P_{H_2O}$